# EUROPÄISCHE PATENTSCHRIFT

(11) **EP 0 990 875 B1**
(45) Veröffentlichungstag und Bekanntmachung des Hinweises auf die Patenterteilung: **22.12.2004**
(21) Anmeldenummer: 99111827.4
(22) Anmeldetag: 19.06.1999
(51) Int. Cl.: G01D 11/26, G12B 11/00

(54) **Anzeigevorrichtung**
Display
Dispositif d'affichage

(30) Priorität: 30.09.1998 DE 19844773
(43) Veröffentlichungstag der Anmeldung: 05.04.2000
(73) Patentinhaber: ROBERT BOSCH GMBH, 70442 Stuttgart (DE)
(72) Erfinder: Schach, Harald, 71287 Flacht (DE); Herzog, Bernhard, 70619 Stuttgart (DE)

(56) Entgegenhaltungen:
- DE-A- 19 549 328
- US-A- 5 247 429

## Beschreibung

### STAND DER TECHNIK

Die vorliegende Erfindung betrifft eine Anzeigevorrichtung, und insbesondere eine Anzeigevorrichtung für ein Kombiinstrument eines Kraftfahrzeugs mit einem oder mehreren Anzeigeelementen, welche im aktiven Zustand beleuchtbar sind und im inaktiven Zustand nicht, und einer in Draufsicht vor dem oder den Anzeigeelementen angeordneten Deckscheibe, wobei die Deckscheibe derart gestaltet ist, daß sie eine reduzierte Lichttransmission aufweist und dadurch das oder die Anzeigeelemente im inaktiven Zustand im wesentlichen nicht sichtbar sind (sogenannte Black-Screen-Deckscheibe).

Obwohl auf beliebige Anzeigevorrichtungen anwendbar, wie z.B. Anzeigevorrichtungen für Schiffe, Flugzeuge usw., werden die vorliegende Erfindung sowie die ihr zugrundeliegende Problematik in bezug auf eine Anzeigevorrichtung für ein Kombiinstrument eines Kraftfahrzeugs erläutert.

Elektronische Kombiinstrumente von Kraftfahrzeugen weisen in der Regel eine Mehrzahl von Anzeigevorrichtungen auf, die in einem gemeinsamen Gehäuse untergebracht sind und von der Vorderseite vom Fahrer durch eine transparente Deckscheibe ablesbar sind. Bei solchen elektronischen Kombiinstrumenten sind üblicherweise analoge Zeigeranzeigeeinrichtungen und digitale Anzeigeeinrichtungen vorgesehen.

Bei analogen Zeigeranzeigeeinrichtungen wird ein auf einer Welle angebrachter Zeiger mittels eines gesteuerten Zeigerantriebs zur analogen Darstellung einer Information, z.B. Geschwindigkeit, Drehzahl, Kühlwassertemperatur, Öltemperatur, Tankfüllstand und dergleichen, auf einem zugehörigen Zifferblatt bzw. einer Skaleneinrichtung angetrieben.

Seit einiger Zeit werden als digitale Anzeigeeinrichtungen in solchen Kombiinstrumenten von Kraftfahrzeugen elektrooptische Anzeigeeinrichtungen (auch als Displays bezeichnet) zur Darstellung beliebiger Informationen, wie z.B. Warnfunktionen, Radioanzeige, Telefonanzeige, Verkehrleitinformation usw., eingesetzt.

Hierzu werden bisher vornehmlich Leuchtdiodenanzeigen bzw. LEDs (LED = Light Emitting Diode) verwendet. Weiterhin werden Flüssigkristallanzeigen bzw. LCDs (LCD = Liquid Crystal Display) verwendet und in Einzelfällen auch schon Vakuum-Fluoreszenz-Anzeigen bzw. VFDs (VFD = Vacuum Fluorescence Display) oder sogar andere exotische bekannte Technologien für Anzeigeeinrichtungen, wie z.B. Plasmaanzeigen.

Zur Erzeugung spezieller Gestaltungseffekte werden solche elektrooptischen Anzeigevorrichtungen für Kraftfahrzeuge in den letzten Jahren vermehrt als sogenannte Black-Screen-Instrumente ausgeführt. Dabei liegt zwischen dem Betrachter und den eigentlichen Anzeigeelementen eine besondere Deckscheibe, die eine reduzierte Transmission von typischerweise 20 bis 35% aufweist. Dadurch erscheint die Anzeigevorrichtung im inaktiven, d.h. unbeleuchteten, Zustand als annähernd schwarze Fläche ("Black-Screen"). Beim Einschalten der Beleuchtung bzw. des aktiven Displays hinter der Deckscheibe werden diese Anzeigeelemente sichtbar.

Die Deckscheibe von Black-Screen-Instrumenten wird üblicherweise aus PMMA (Polymethylmetacrylat) oder anderen transparenten Kunststoffen mit eingelagerten schwarzen Pigmenten hergestellt. Diese Realisierung hat jedoch unter anderem den Nachteil, daß die Oberfläche je nach Anordnung im Fahrzeug und je nach Lichteinfall stark spiegelt.

Übliche Entspiegelungsverfahren (z.B. Dünnschicht-Entspiegelung) haben andererseits Nachteile bezüglich Kratzfestigkeit und Herstellungskosten. Außerdem treten Fingerabdrücke und ähnliche Verschmutzungen besonders stark hervor.

Die der vorliegenden Erfindung zugrundeliegende Problematik besteht also allgemein darin, eine verbesserte Anzeigevorrichtung zu schaffen, welche die Spiegelung deutlich reduziert, ohne die beschriebenen Nachteile aufzuweisen.

### VORTEILE DER ERFINDUNG

Die erfindungsgemäße Anzeigevorrichtung mit den Merkmalen des Anspruchs 1 weist gegenüber den bekannten Lösungsansätzen den Vorteil auf, daß die Reflexion gegenüber üblichen Black-Screen-Deckscheiben erheblich verminderbar ist. Verschmutzung, wie Staub oder Fingerabdrücke, sind weniger auffällig als auf einer herkömmlichen Black-Screen-Deckscheibe. Die bessere Entspiegelung erlaubt es in bestimmten Fällen, auf die heute übliche Neigung der Deckscheibe zu verzichten und spart somit Platz. Die erfindungsgemäße Anzeigevorrichtung erlaubt neue Gestaltungsmöglichkeiten.

Die der vorliegenden Erfindung zugrundeliegende Idee besteht darin, das in der Deckscheibe ohnehin zu absorbierende Licht gleich an ihrer Oberfläche zu absorbieren, womit Transmission und Reflexion (im Gegensatz zur klaren Deckscheibe) gleichzeitig reduziert werden können.

In den Unteransprüchen finden sich vorteilhafte Weiterbildungen und Verbesserungen der in Anspruch 1 angegebenen Anzeigevorrichtung.

Gemäß einer bevorzugten Weiterbildung deckt die Oberflächenbeschichtung die Oberfläche der Deckscheibe nur teilweise ab. So lassen sich Muster durch die Beschichtungsdichte darstellen. Dies ermöglicht einen quasi beliebigen, vordefinierten Verlauf der Transmission über der Deckscheiben-Fläche.

Gemäß einer weiteren bevorzugten Weiterbildung weist die Oberflächenbeschichtung eine feine Rasterstruktur, vorzugsweise mit einer Rasterstrukturoberfläche matter und/oder dunkler Farbe, und höchstvorzugsweise mit einer Rasterstrukturoberfläche mattschwarzer Farbe, auf.

Gemäß einer weiteren bevorzugten Weiterbildung ist die Rasterstruktur aus gleichartigen Flächen zusammengesetzt.

Gemäß einer weiteren bevorzugten Weiterbildung weist die Rasterstruktur eine Teilung zwischen 0,2 mm und 0,5 mm auf.

Gemäß einer weiteren bevorzugten Weiterbildung ist die Rasterstruktur durch einen Rasterdruckvorgang, vorzugsweise mittels Tampondruck, aufgebracht.

Gemäß einer weiteren bevorzugten Weiterbildung ist die Farbe der Rasterstrukturoberfläche matt und weist mehrere verschiedene Farben auf. Die Oberfläche (Erscheinungsbild bei inaktivem Display) kann somit nicht nur schwarz, sondern in gewissen Grenzen farbig oder sogar gemustert ausgeführt werden.

Gemäß einer weiteren bevorzugten Weiterbildung variiert die Rasterstruktur über die Fläche der Deckscheibe derart, daß die Transmission in verschiedenen Bereichen der Deckscheibe unterschiedliche Werte annimmt. Damit lassen sich in Black-Screen-Bereiche auch White-Screen-Bereiche einlagern. Jegliche Muster mit kleinen transparenten und absorbierenden Teilflächen sind möglich.

Gemäß einer weiteren bevorzugten Weiterbildung nimmt die Transmission zum Rand der Deckscheibe hin ab.

Gemäß einer weiteren bevorzugten Weiterbildung ist die Oberflächenbeschichtung auf der dem oder den Anzeigeelementen zugewandten Seite der Deckscheibe aufgebracht. Dies ist insbesondere bei Verwendung von einer getönten Deckscheibe vorteilhaft.

Gemäß einer weiteren bevorzugten Weiterbildung ist die Oberflächenbeschichtung auf der dem oder den Anzeigeelementen abgewandten Seite der Deckscheibe aufgebracht.

Gemäß einer weiteren bevorzugten Weiterbildung weist die Deckscheibe zwischen den Bereichen mit der Oberflächenbeschichtung eine Entspiegelung, vorzugsweise in Form einer Dünnschichtentspiegelung, auf. Wenn zusätzlich eine herkömmliche Entspiegelung in den Zwischenräumen des Rasterdrucks verwendet wird, wird deren Empfindlichkeit gegenüber Kratzern und Verschmutzung ebenfalls herabgesetzt.

Gemäß einer weiteren bevorzugten Weiterbildung ist auf der dem oder den Anzeigeelementen zugewandten Seite der Deckscheibe eine Entspiegelung, vorzugsweise in Form einer Dünnschichtentspiegelung, aufgebracht. Diese Entspiegelungsschicht ist mechanisch geschützt, denn von außen nicht zugänglich.

Gemäß einer weiteren bevorzugten Weiterbildung weist die Deckscheibe eine innere Tönung auf. Diese an sich bekannte Tönung durch eingelagerte Pigmente unterstützt die Oberflächenbeschichtung in ihrer optischen Wirkung.

Gemäß einer weiteren bevorzugten Weiterbildung sind die Oberflächenbeschichtung und optionellerweise eine Entspiegelung auf einer Folie aufgebracht, welche auf die Deckscheibe aufgebracht ist. Dies kann für ebene oder zylindrisch gewölbte Flächen durch Auflaminieren oder für mehrdimensional gewölbte Flächen durch Hinterspritzen geschehen. Der besondere Vorteil ist die Preisgünstigkeit dieses Ansatzes.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Darstellung einer ersten Ausführungsform der erfindungsgemäßen Anzeigevorrichtung; und
- Fig. 2: eine vergrößerte Darstellung des Ausschnitts A in Fig. 1.

### BESCHREIBUNG DER AUSFÜHRUNGSBEISPIELE

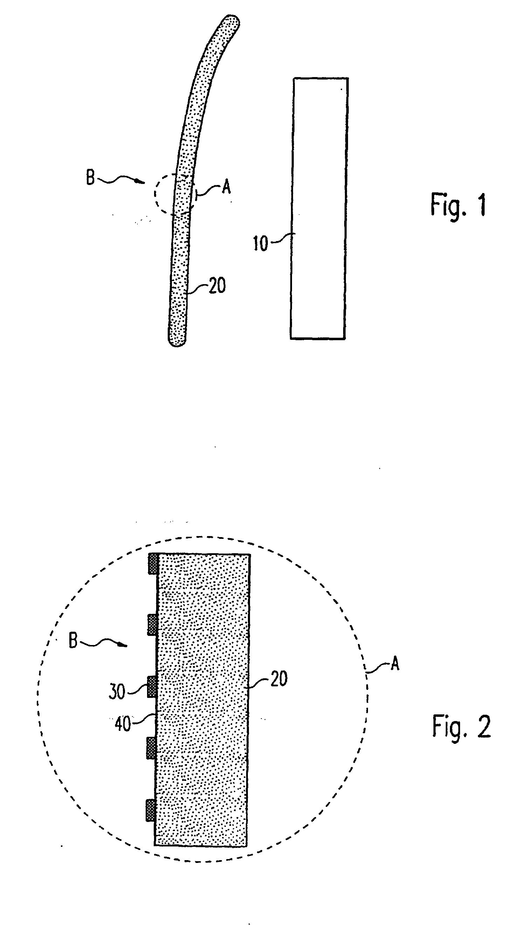

In Fig. 1 und 2 bezeichnen 10 ein Anzeigeelement, 20 eine Deckscheibe, 30 eine Oberflächenbeschichtung in Form eines Rasterdrucks, A einen Ausschnitt und B eine Blickrichtung.

Die Anzeigevorrichtung gemäß der illustrierten Ausführungsform dient für ein Kombiinstrument eines Kraftfahrzeugs.

Das Anzeigeelement 10 ist im aktiven Zustand beleuchtet und im inaktiven Zustand nicht. Mit anderen Worten kann der Fahrer oder die Systemsteuerung die Beleuchtung und damit die Beleuchtung des Anzeigeelements 10 ein- und ausschalten.

In Blickrichtung B ist vor dem Anzeigeelement 10 die Deckscheibe 20 angeordnet, wobei die Deckscheibe 20 derart gestaltet ist, daß sie eine reduzierte Lichttransmission aufweist und dadurch das oder die Anzeigeelemente 10 im inaktiven, d.h. unbeleuchteten Zustand, im wesentlichen nicht sichtbar sind.

Die Deckscheibe 20 weist zur Reduzierung der Lichttransmission eine Oberflächenbeschichtung 30 auf, welche die Oberfläche der Deckscheibe 20 nur teilweise teilweise abdeckt.

Mit anderen Worten hat das Oberflächenraster eine bestimmte Rasterpunktdichte, welche den Black-Screen-Effekt bei einem typischen Betrachtungsabstand von 70 cm hervorruft.

Die Oberflächenbeschichtung ist hier auf der dem Anzeigeelement 10 abgewandten Seite der Deckscheibe 20 aufgebracht. Außerdem weist die Deckscheibe 20 eine leichte innere Tönung auf.

Weiterhin weist die Deckscheibe 20 zwischen den Bereichen mit der Oberflächenbeschichtung 30 eine Entspiegelung 40 in Form einer Dünnschichtentspiegelung auf.

Die Oberflächenbeschichtung 30 hat eine feine Rasterstruktur mit einer Rasterstrukturoberfläche mattschwarzer Farbe, wobei die Rasterstruktur bei diesem Beispiel aus gleichartigen Flächen zusammengesetzt ist und eine Teilung typischerweise im Bereich von 0,2 mm bis 0,5 mm aufweist.

Die Rasterstruktur wird bei diesem Beispiel in der Fertigung durch einen Rasterdruckvorgang mittels Tampondruck aufgebracht.

Bei der Auslegung der Oberflächenbeschichtung 30 sind folgende Punkte zu beachten.

Die Rasterweite darf nicht zu grob gewählt werden, weil ab etwa 0,4 mm Rasterweite die Rasterstruktur deutlich sichtbar wird (bei einem typischen Betrachtungsabstand von etwa 700 mm).

Die Rasterstruktur sollte auch nicht unnötig fein gewählt werden, weil sonst zunehmend Beugungserscheinungen auftreten, was zu Weichzeichner-Effekten führen kann.

Aus dem selben Grund sollten die Anzeigeelemente möglichst dicht hinter der erfindungsgemäß beschichteten Deckscheibe liegen, da die Überstrahlung bei hohem Kontrast mit dem Abstand zur Rasterstruktur zunimmt.

Weichzeichner-Effekte können auch dadurch reduziert werden, daß der Kontrast von Displays und Zifferblätteren nicht unnötig hoch gewählt wird. Hierfür ist es zweckmäßig, die Beleuchtung der Anzeigeelemente (vor allem der Zifferblätter) umgebungslichtabhängig so zu dimmen, daß der Kontrast etwa konstant bleibt.

Damit die Überlagerung mit dahinterliegenden Display-Rasterstrukturen nicht zu einem Moiré-Effekt führt, kann die Rasterdruckstruktur der Deckscheibe 20 um einen Winkel von z.B. 15° gegenüber dem Display-Raster verdreht werden.

Die Ausführung der Rasterstruktur sollte so beschaffen sein, daß die Kratzfestigkeit und die Beständigkeit gegenüber üblichen Reinigungsmitteln für eine Anwendung im Bereich der Armaturentafel ausreicht.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Obwohl die Rasterstruktur bei dem obigen Beispiel konstant ist, ist es möglich, daß die Rasterstruktur über die Fläche der Deckscheibe 20 derart variiert, daß die Transmission in verschiedenen Bereichen der Deckscheibe 20 unterschiedliche Werte annimmt.

Weiterhin sind nahezu beliebige Farbkombinationen vorstellbar, und auch das Herstellungsverfahren ist nicht auf den Rasterdruck beschränkt, obwohl dieser bevorzugt ist.

Auch ist es selbstverständlich möglich, eine durchgehende Oberflächenbeschichtung vorzusehen (d.h. Rasterpunktdichte quasi unendlich).

## Patentansprüche

1. Anzeigevorrichtung, insbesondere für ein Kombiinstrument eines Kraftfahrzeugs, mit:
einem oder mehreren Anzeigeelementen (10), welche im aktiven Zustand beleuchtbar sind und im inaktiven Zustand nicht; und
einer in Draufsicht vor dem oder den Anzeigeelementen (10) angeordneten Deckscheibe (20);
wobei die Deckscheibe (20) derart gestaltet ist, daß sie eine reduzierte Lichttransmission aufweist und dadurch das oder die Anzeigeelemente (10) im inaktiven Zustand im wesentlichen nicht sichtbar sind;
**dadurch gekennzeichnet, daß**
die Deckscheibe (20) zur Reduzierung der Lichttransmission eine Oberflächenbeschichtung (30) aufweist, welche die Oberfläche der Deckscheibe (20) zumindest teilweise abdeckt.

2. Anzeigevorrichtung nach Anspruch 1, **dadurch gekennzeichnet, daß** die Oberflächenbeschichtung (30) die Oberfläche der Deckscheibe (20) nur teilweise abdeckt.

3. Anzeigevorrichtung nach Anspruch 2, **dadurch gekennzeichnet, daß** die Oberflächenbeschichtung (30) eine feine Rasterstruktur, vorzugsweise mit einer Rasterstrukturoberfläche matter und/oder dunkler Farbe, und höchstvorzugsweise mit einer Rasterstrukturoberfläche mattschwarzer Farbe, aufweist.

4. Anzeigevorrichtung nach Anspruch 3, **dadurch gekennzeichnet, daß** die Rasterstruktur aus gleichartigen Flächen zusammengesetzt ist.

5. Anzeigevorrichtung nach Anspruch 3 oder 4, **dadurch gekennzeichnet, daß** die Rasterstruktur eine Teilung zwischen 0,2 mm und 0,5 mm aufweist.

6. Anzeigevorrichtung nach Anspruch 3, 4 oder 5, **dadurch gekennzeichnet, daß** die Rasterstruktur durch einen Rasterdruckvorgang, vorzugsweise mittels Tampondruck, aufgebracht ist.

7. Anzeigevorrichtung nach einem der Ansprüche 3 bis 6, **dadurch gekennzeichnet, daß** die Farbe der Rasterstrukturoberfläche matt ist und mehrere verschiedene Farben aufweist.

8. Anzeigevorrichtung nach einem der Ansprüche 3 bis 7, **dadurch gekennzeichnet, daß** die Rasterstruktur über die Fläche der Deckscheibe (20) derart variiert, daß die Transmission in verschiedenen Bereichen der Deckscheibe (20) unterschiedliche Werte annimmt.

9. Anzeigevorrichtung nach einem der Ansprüche 3 bis 8, **dadurch gekennzeichnet, daß** die Transmission zum Rand der Deckscheibe (20) hin abnimmt.

10. Anzeigevorrichtung nach einem der vorhergehenden Ansprüche, **dadurch gekennzeichnet, daß** die Oberflächenbeschichtung auf der dem oder den Anzeigeelementen (10) zugewandten Seite der Deckscheibe (20) aufgebracht ist.

11. Anzeigevorrichtung nach einem der vorhergehenden Ansprüche, **dadurch gekennzeichnet, daß** die Oberflächenbeschichtung auf der dem oder den Anzeigeelementen (10) abgewandten Seite der Deckscheibe (20) aufgebracht ist.

12. Anzeigevorrichtung nach einem der vorhergehenden Ansprüche 2 bis 11, **dadurch gekennzeichnet, daß** die Deckscheibe (20) zwischen den Bereichen mit der Oberflächenbeschichtung (30) eine Entspiegelung (40), vorzugsweise in Form einer Dünnschichtentspiegelung, aufweist.

13. Anzeigevorrichtung nach Anspruch 11, **dadurch gekennzeichnet, daß** auf der dem oder den Anzeigeelementen (10) zugewandten Seite der Deckscheibe (20) eine Entspiegelung, vorzugsweise in Form einer Dünnschichtentspiegelung, aufgebracht ist.

14. Anzeigevorrichtung nach einem der vorhergehenden Ansprüche, **dadurch gekennzeichnet, daß** die Deckscheibe (20) eine innere Tönung aufweist.

15. Anzeigevorrichtung nach einem der vorhergehenden Ansprüche, **dadurch gekennzeichnet, daß** die Oberflächenbeschichtung (30) und optionellerweise eine Entspiegelung auf einer Folie aufgebracht sind, welche auf die Deckscheibe (20) aufgebracht ist.

## Claims

1. Display, in particular for a combination instrument of a motor vehicle, having:
one or more display elements (10) which can be illuminated in the active state and cannot be illuminated in the inactive state; and
a cover (20) which is arranged, in a plan view, in front of the display element or elements (10);
the cover (20) being configured in such a way that it has a reduced light transmission and as a result the display element or elements (10) are essentially invisible in the inactive state; **characterized in that** the cover (20) has, in order to reduce the light transmission, a surface coating (30) which at least partially covers the surface of the cover (20).

2. Display according to Claim 1, **characterized in that** the surface coating (30) covers the surface of the cover (20) only partially.

3. Display according to Claim 2, **characterized in that** the surface coating (30) has a fine grid structure, preferably with a grid structure surface of a matt and/or dark colour, and most preferably with the grid structure surface with a matt black colour.

4. Display according to Claim 3, **characterized in that** the grid structure is composed of surfaces of the same type.

5. Display device according to Claim 3 or 4, **characterized in that** the grid structure has a division between 0.2 mm and 0.5 mm.

6. Display according to Claim 3, 4 or 5, **characterized in that** the grid structure is applied by a screen printing process, preferably by means of pads printing.

7. Display according to one of Claims 3 to 6, **characterized in that** the colour of the grid structure surface is matt and has a plurality of different colours.

8. Display according to one of Claims 3 to 7, **characterized in that** the grid structure is varied over the surface of the cover (20) in such a way that the transmission has different values in different regions of the cover (20).

9. Display according to one of Claims 3 to 8, **characterized in that** the transmission decreases towards the edge of the cover (20).

10. Display according to one of the preceding claims, **characterized in that** the surface coating is applied to the side of the cover (20) facing the display element or elements (10).

11. Display according to one of the preceding claims, **characterized in that** the surface coating is applied to the side of the cover (20) facing away from the display element or elements (10).

12. Display according to one of the preceding Claims 2 to 11, **characterized in that** the cover (20) has an anti-reflection coating (40), preferably in the form of thin-layer anti-reflection coating, between the regions with the surface coating (30).

13. Display according to Claim 11, **characterized in that** an anti-reflection coating, preferably in the form of a thin-layer anti-reflection coating, is applied to the side of the cover (20) facing the display element or elements (10).

14. Display according to one of the preceding claims, **characterized in that** the cover (20) has an internal tonality.

15. Display according to one of the preceding claims, **characterized in that** the surface coating (30) and optionally an anti-reflection coating are applied to a film which is applied to the cover (20).

## Revendications

1. Dispositif d'affichage notamment pour un instrument combiné équipant un véhicule automobile comprenant :
- un ou plusieurs éléments d'affichage (10) qui sont éclairés à l'état actif et ne le sont pas à l'état inactif,
- une vitre de recouvrement (20) placée devant le ou les éléments d'affichage (10) en vue de dessus,
la vitre de recouvrement (20) étant formée pour avoir une transmission lumineuse réduite et ne pas laisser pratiquement apparaître le ou les éléments d'affichage (10) à l'état inactif,
**caractérisé en ce que**
la vitre de recouvrement (20) présente un revêtement de surface (30) pour réduire sa construction lumineuse, ce revêtement couvrant au moins en partie la surface de la vitre (20).

2. Dispositif d'affichage selon la revendication 1,
**caractérisé en ce que**
le revêtement de surface (30) ne recouvre que partiellement la surface supérieure de la vitre de recouvrement (20).

3. Dispositif d'affichage selon la revendication 2,
**caractérisé en ce que**
le revêtement de surface (30) présente une structure de trame fine de préférence avec une surface supérieure à structure de trame mate et/ ou une teinte sombre et d'une manière particulièrement préférentielle une surface supérieure de structure en trame en couleur noire mate.

4. Dispositif d'affichage selon la revendication 3,
**caractérisé en ce que**
la structure de trame est composée de surfaces analogues.

5. Dispositif d'affichage selon l'une quelconque des revendications 3 ou 4,
**caractérisé en ce que**
la structure de trame présente un écartement compris entre 0,2 mm et 0,5 mm.

6. Dispositif d'affichage selon l'une quelconque des revendications 3, 4 ou 5,
**caractérisé en ce que**
la structure de trame est réalisée par une impression de trame de préférence une impression au tampon.

7. Dispositif d'affichage selon l'une quelconque des revendications 3 à 6,
**caractérisé en ce que**
la teinte de la surface supérieure de la structure de trame est mate et correspond à plusieurs couleurs différentes.

8. Dispositif d'affichage selon l'une quelconque des revendications 3 à 7,
**caractérisé en ce que**
la structure de trame varie sur la surface de la vitre de recouvrement (20) pour que la transmission prenne des valeurs différentes dans différentes zones de la vitre de recouvrement (20).

9. Dispositif d'affichage selon l'une quelconque des revendications 3 à 8,
**caractérisé en ce que**
la transmission diminue vers le bord de la ligne de recouvrement (20).

10. Dispositif d'affichage selon l'une quelconque des revendications précédentes,
**caractérisé en ce que**
le revêtement de surface est prévu sur le côté de la vitre de recouvrement (20) tournée vers le ou les éléments d'affichage (10).

11. Dispositif d'affichage selon l'une quelconque des revendications précédentes,
**caractérisé en ce que**
le revêtement de surface supérieure est appliqué sur le côté de la vitre de recouvrement (20) à l'opposé de celui du ou des éléments d'affichage (10).

12. Dispositif d'affichage selon l'une quelconque des revendications 2 à 11,
**caractérisé en ce que**
la vitre de recouvrement (20) présente un moyen antireflet (40) de préférence sous la forme d'une couche mince antireflet entre les zones munies d'un revêtement de surface supérieure (30).

13. Dispositif d'affichage selon la revendication 11,
**caractérisé en ce que**
la face de la vitre de recouvrement (20) tournée vers le ou les éléments d'affichage (10) comporte un moyen antireflet de préférence sous la forme d'une couche mince antireflet.

14. Dispositif d'affichage selon l'une quelconque des revendications précédentes,
**caractérisé en ce que**
la vitre de recouvrement (20) est teintée dans la masse.

15. Dispositif d'affichage selon l'une quelconque des revendications précédentes,
**caractérisé en ce que**
le revêtement de surface (30) et en option un moyen antireflet sont réalisés sur un film que l'on applique sur la vitre de recouvrement (20).
